(19) Europäisches Patentamt
European Patent Office
Office européen des brevets

(11) **EP 4 432 247 A1**

(12) **EUROPEAN PATENT APPLICATION**

(43) Date of publication:
**18.09.2024 Bulletin 2024/38**

(21) Application number: **23162627.6**

(22) Date of filing: **17.03.2023**

(51) International Patent Classification (IPC):
**G06V 10/774** (2022.01)   **G06V 10/778** (2022.01)
**G06V 20/56** (2022.01)   **G06V 20/64** (2022.01)

(52) Cooperative Patent Classification (CPC):
**G06V 20/56; G06V 10/774; G06V 10/7792;
G06V 20/64**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **TOYOTA JIDOSHA KABUSHIKI KAISHA
Aichi-Ken 471-8571 (JP)**
• **ETH Zurich
8092 Zürich (CH)**

(72) Inventors:
• **ABBELOOS, Wim
1140 BRUSSELS (BE)**

• **UNAL, Ozan
8092 ZURICH (CH)**
• **DAI, Dengxin
8092 ZURICH (CH)**
• **HOYER, Lukas
8092 ZURICH (CH)**
• **BARAN CAN, Yigit
8092 ZURICH (CH)**
• **VAN GOOL, Luc
8092 ZURICH (CH)**

(74) Representative: **Cabinet Beau de Loménie
158, rue de l'Université
75340 Paris Cedex 07 (FR)**

(54) **METHODS FOR SEMANTIC SEGMENTATION AND TRAINING METHODS**

(57)    A computer-implemented method for training a semantic segmentation model. A training dataset (100) comprising a first representation (120) and a second representation (130) is provided. The first representation (120) and the second representation (130) have at least a partial overlap in field-of view. First encoded features (127) are generated from the first representation (120) using a first semantic segmentation model (125) trained for semantic segmentation. Second encoded features (137) are generated for the second representation (130) using a second semantic segmentation model (135). Auxiliary features (131) are calculated for elements of the second representation (130) having correspondences with elements of the first representation (120). The second semantic segmentation model (125) is optimized using a loss function (140) that compares, for elements of the second representation (130) having correspondences with elements of the first representation (120), the second encoded features (137) to the auxiliary features (131).

**FIG. 2**

EP 4 432 247 A1

**Description**

BACKGROUND OF THE INVENTION

1. Field of the Invention

The invention relates to the field of semantic segmentation, such as the semantic segmentation of LIDAR point cloud data. In particular, the invention relates to a method for training a semantic segmentation model.

2. Description of Related Art

3D perception problems are becoming more and more important in many fields. In particular, methods for 3D scene understanding in autonomous vehicles relying on semantic segmentation of LIDAR point cloud data (LIDAR semantic segmentation or "LSS") show a growing interest.

Semantic segmentation is a dense regression task wherein labels are assigned to elements of input data. In particular, LSS generally consists in assigning labels to point cloud data acquired by a LIDAR system sensing, for example, a scene surrounding an autonomous vehicle.

Some LSS methods of the prior art relying on neural networks need reference labeled point cloud datasets for training the utilized neural networks. It is generally required that such training datasets are completely labelled, i.e. that all points of the point cloud are labelled. However, manual labelling of training datasets is both time consuming and expensive, in particular for large-scale datasets.

Methods of the prior generally take two main paths for mitigating the problem of extensive labelling of LIDAR point cloud data: weak supervision training and semi-supervision training. In the present description, semi-supervision and weak supervision are different types of supervision as defined herebelow.

Weak supervision training methods rely on training dataset wherein only a portion of the points in each frame of the point cloud data are labeled, thereby reducing the cost of labelling. Examples of such weak supervision methods are disclosed, for example, in [REF 1], listed hereafter.

Semi-supervision training methods rely on training datasets wherein only a subset of the frames comprised in the LIDAR point cloud data are labeled. In other words, some of the frames are completely labeled while the rest of the frames remain completely unlabeled. Examples of such semi-supervision methods are disclosed, for example, in [REF 2], listed hereafter.

These methods are incomplete supervision methods where some labels are lacking. The lack of information due to the missing labels undermines the performance of training methods for semantic segmentation of the prior art. In particular, the models trained on incompletely labelled datasets generally suffer from error prone boundary estimation between classes as well as high false negative rates. The loss of performance is particularly marked for regions wherein LIDAR point clouds are sparse. There is thus a need for methods overcoming such problems of the prior art.

The following references disclose various methods relating to the field semantic segmentation and to techniques used to perform such task.

[REF 1] UNAL, Ozan, DAI, Dengxin, et VAN GOOL, Luc. Scribble-supervised lidar semantic segmentation. In : Proceedings of the IEEE/CVF Conference on Computer Vision and Pattern Recognition. 2022. p. 2697-2707.
[REF 2] JIANG, Li, SHI, Shaoshuai, TIAN, Zhuotao, et al. Guided point contrastive learning for semi-supervised point cloud semantic segmentation. In : Proceedings of the IEEE/CVF international conference on computer vision. 2021. p. 6423-6432.
[REF 3] ZHU, Xinge, ZHOU, Hui, WANG, Tai, et al. Cylindrical and asymmetrical 3d convolution networks for lidar segmentation. In : Proceedings of the IEEE/CVF conference on computer vision and pattern recognition. 2021. p. 9939-9948.
[REF 4] CHOY, Christopher, GWAK, JunYoung, et SAVARESE, Silvio. 4d spatio-temporal convnets: Minkowski convolutional neural networks. In : Proceedings of the IEEE/CVF conference on computer vision and pattern recognition. 2019. p. 3075-3084.
[REF 5] TANG, Haotian, LIU, Zhijian, ZHAO, Shengyu, et al. Searching efficient 3d architectures with sparse point-voxel convolution. In : Computer Vision-ECCV 2020: 16th European Conference, Glasgow, UK, August 23-28, 2020, Proceedings, Part XXVIII. Cham : Springer International Publishing, 2020. p. 685-702.
[REF 6] TARVAINEN, A. et VALPOLA, H. Weight-averaged consistency targets improve semi-supervised deep learning results. arXiv 2017. arXiv preprint arXiv: 1703.01780.
[REF 7] ZOU, Yang, YU, Zhiding, KUMAR, B. V. K., et al. Unsupervised domain adaptation for semantic segmentation via class-balanced self-training. In : Proceedings of the European conference on computer vision (ECCV). 2018. p. 289-305.

[REF 8] HE, Ruifei, YANG, Jihan, et QI, Xiaojuan. Re-distributing biased pseudo labels for semi-supervised semantic segmentation: A baseline investigation. In : Proceedings of the IEEE/CVF International Conference on Computer Vision. 2021. p. 6930-6940.

[REF 9] BEHLEY, Jens, GARBADE, Martin, MILIOTO, Andres, et al. Semantickitti: A dataset for semantic scene understanding of lidar sequences. In : Proceedings of the IEEE/CVF international conference on computer vision. 2019. p. 9297-9307.

[REF 10] KONG, Lingdong, REN, Jiawei, PAN, Liang, et al. Lasermix for semi-supervised lidar semantic segmentation. arXiv preprint arXiv:2207.00026, 2022.

[REF 11] CHEN, Xiaokang, YUAN, Yuhui, ZENG, Gang, et al. Semi-supervised semantic segmentation with cross pseudo supervision. In : Proceedings of the IEEE/CVF Conference on Computer Vision and Pattern Recognition. 2021. p. 2613-2622.

[REF 12] HOYER, Lukas, DAI, Dengxin, et VAN GOOL, Luc. Daformer: Improving network architectures and training strategies for domain-adaptive semantic segmentation. In : Proceedings of the IEEE/CVF Conference on Computer Vision and Pattern Recognition. 2022. p. 9924-9935.

[REF 13] GEIGER, Andreas, LENZ, Philip, STILLER, Christoph, et al. Vision meets robotics: The kitti dataset. The International Journal of Robotics Research, 2013, vol. 32, no 11, p. 1231-1237.

[REF 14] LIU, Ze, LIN, Yutong, CAO, Yue, et al. Swin transformer: Hierarchical vision transformer using shifted windows. In : Proceedings of the IEEE/CVF international conference on computer vision. 2021. p. 10012-10022.

[REF 15] XIE, Enze, WANG, Wenhai, YU, Zhiding, et al. SegFormer: Simple and efficient design for semantic segmentation with transformers. Advances in Neural Information Processing Systems, 2021, vol. 34, p. 12077-12090.

[REF 16] RICHTER, Stephan R., VINEET, Vibhav, ROTH, Stefan, et al. Playing for data: Ground truth from computer games. In : Computer Vision-ECCV 2016: 14th European Conference, Amsterdam, The Netherlands, October 11-14, 2016, Proceedings, Part II 14. Springer International Publishing, 2016. p. 102-118.

## SUMMARY OF THE INVENTION

According to a first aspect, the present disclosure is related to a method for training a semantic segmentation model. The method comprises steps of:

- providing a training dataset comprising a first representation and a second representation (of a scene), wherein the first representation and the second representation have at least a partial overlap in field-of-view;
- generating first encoded features for elements of the first representation using a trained first semantic segmentation model;
- generating second encoded features for elements of the second representation using a second semantic segmentation model;
- determining correspondences between elements of the first representation and elements of the second representation;
- based on the first encoded features, calculating auxiliary features for elements of the second representation having correspondences with elements of the first representation; and
- optimizing the second semantic segmentation model by minimizing a loss function configured to compare, for elements of the second representation having correspondences with elements of the first representation, the second encoded features to the auxiliary features.

In the present description, the first representation and the second representation have at least a partial overlap of field-of-view, i.e. that the first representation and the second representation represent at least partially similar portions of a scene. This can be achieved, for example, when the first representation is obtained with a first system and the second representation is obtained with a second system, the first system and the second system being configured to sense, at least partially, the same extent of the observable world.

In the present description, encoded features may be high-level features that are output by an inner layer (hidden layer) of a neural network. In particular, the first and the second semantic segmentation models may be neural networks with a plurality of layers, comprising hidden layers generating first and second encoded features, respectively.

In the present description, a correspondence between an element of the first representation and an element of the second representation is the existence of a geometrical mapping between such elements. The geometrical mapping may be calculated, for example, based on the calibration matrices of systems used to obtain the first representation and the second representation. When a correspondence is found between an element of the first representation and an element of the second representation, such element of the second representation is described as having a corresponding element in the first representation.

With the method according to the present description, a first representation of a scene with a partial overlap of field-of-view with a second representation of the scene is advantageously exploited to guide the prediction of labels of the second representation (also referred to as labelling).

In particular, first representations are fed to a (first) trained semantic segmentation model, which extracts features that can be used as a complementary input during training of a (second) semantic segmentation model, thereby compensating for the lack of information due to incompletely labelled training datasets. Such a process may be referred to as a distillation of the features from the trained first semantic segmentation model to the second segmentation model under training. Therefore, the second semantic segmentation model is auxiliary supervised by the distilled features of the first semantic segmentation model.

According to embodiments, the first representation is denser than the second representation. In the present description, a first representation is denser than a second representation when, for a predetermined extent of a scene (field of view), the first representation comprises more elements than the second representation.

With such configuration, the first representation provides a higher number of elements that can be used to guide the prediction of the labels of the second representation. Such configuration is particularly advantageous to guide the prediction of labels in sparse regions of the scene, which comprise only a limited number of elements of the second representation but a larger number of elements of the first representation.

According to embodiments, the first representation is a two-dimensional (2D) image comprising an array of pixels and the second representation is a three-dimensional (3D) point cloud, for example a LIDAR point cloud, comprising points.

In 3D perception systems, for example in autonomous vehicles, LIDARS are often paired with cameras which are inherently configured to provide denser representations of scenes than the LIDAR. Therefore, by virtue of the available images from the camera, the present method may advantageously be used to train a semantic segmentation model to label LIDAR point cloud data acquired by the LIDAR of an autonomous vehicle without requiring a training dataset with extensive and costly labels.

The additional information that can be extracted from the camera images provides improvements in the training of the 3D LIDAR semantic segmentation model, even under incomplete supervision. Improvements are particularly significant for sparse regions of the scene, such as small objects and distant objects, which can only accommodate a limited number of LIDAR points.

Importantly, with training methods of the prior art, a LIDAR semantic segmentation model is generally trained by using a loss function evaluating the difference between ground truth labels known from the training dataset and labels predicted by the LIDAR semantic segmentation model. However, when using weak supervision and semi-supervision, such methods provide a low level of performance that makes the semantic segmentation model prone to error such as weak boundary estimation and high false negative rates, especially in the sparse regions of the LIDAR point cloud (second representation).

With the present training method, the loss function of the second segmentation model further takes into account differences between features derived from a previously trained first semantic segmentation model and features of the second semantic segmentation model under training.

Advantageously, the present training method is efficient with any type of supervision, even incomplete supervision such as weak supervision and semi-supervision.

Although the present method is predominantly described for application to semantic segmentation of LIDAR point cloud using auxiliary input from a camera image, the present method can be generalized, and thereby also relate, to any semantic segmentation of a second representation of a scene using auxiliary input from a first representation that has at least a partial overlap of field-of-view with the second representation.

According to embodiments, the method further comprises training the first semantic segmentation model on synthetic training datasets. In the present description, a synthetic dataset is a dataset that can be generated by a software (for example a simulation or game) and is thereby completely labelled. Therefore, any manual labelling is avoided and the computational cost of the training method is restrained.

According to embodiments, elements of the second representation have ground truth labels, and the method further comprises adapting the first semantic segmentation model to real training dataset by incomplete supervision using the ground truth labels projected to the first representation, based on the calculated correspondences

Such adaption, also referred to as domain adaptation in the field of machine learning, may be implemented by a further training of the first semantic segmentation model on first representations of the training dataset used during the training of the second semantic segmentation model (for example real images). Such training may be implemented, for example, under supervision of a teacher neural network already trained to predict labels on real images.

In embodiments, such teacher neural network may advantageously be trained under incomplete supervision using the available labels of the training dataset (which are also used to train the second semantic segmentation model).

According to embodiments, the second representation of the training dataset comprises unlabeled elements, such elements lacking ground truth labels.

The present method is particularly advantageous when the training dataset lacks at least some ground truth labels, for example in the case of incomplete supervision such as weak supervision or semi-supervision.

According to embodiments, the loss function comprises a mean teacher term configured to evaluate, for the unlabeled elements of the second representation, a difference between labels generated by the second segmentation model and labels generated by a neural network-based teacher model.

In such configuration, auxiliary supervision of the training of the second segmentation model by the first semantic segmentation model is extended to unlabeled elements of the second representation.

According to embodiments, the second segmentation model comprises a neural network with weights, and wherein the neural network-based teacher model is obtained by exponential moving average of the weights of the second segmentation model.

According to embodiments, the loss function comprises an image-guidance term taking into account, for elements of the second representation having correspondences with elements of the first representation, a difference between the second encoded features generated by the second semantic segmentation model and the auxiliary features derived from the first semantic segmentation model.

According to embodiments, the method further comprises calculating auxiliary features for elements of the second representation that do not have correspondences with elements of the first representation. Further, the loss function comprises a contrastive loss term configured to compare, for the elements of the second representation that do not have correspondences with elements of the first representation, the second encoded features to the auxiliary features.

By virtue of the contrastive loss term, the features extracted by the first semantic segmentation model (i.e. extracted from the first representation) may guide the prediction of labels for elements of the second representation even when such elements are outside the field-of-view of the first representation.

According to embodiments, the second representation is provided by combining a plurality of representations (of a scene), such representations having at least a partial mismatch in field-of-view (of the scene).

By virtue of such combination of representations with different field-of-view, the richness of the training dataset is enhanced. Further, the combination enhances the effectiveness of the training when using a contrastive loss term in the loss function.

According to embodiments, the method further comprises obtaining the first representation of the training dataset from the first training dataset; and obtaining the second representation of the training dataset by combining a part of a second representation from the first training dataset, such part corresponding to elements of the second representation of the first training dataset within the field of view of the first representation, with a part of a second representation from the second training dataset, such part corresponding to elements of the second representation beyond the field of view of the first representation.

According to a second aspect, the present disclosure is further related to a computer-implemented method for semantic segmentation of LIDAR point cloud data, the method comprising steps of: acquiring LIDAR point cloud data and images from observation of a real scene and; utilizing a semantic segmentation model trained using the method according to the first aspect in order to predict labels for the LIDAR point cloud.

According to a third aspect, the present disclosure is further related to a computer program set including instructions for executing the steps of the method according to the first aspect or the second aspect when said program set is executed by at least one computer. This program set can use any programming language and take the form of source code, object code or a code intermediate between source code and object code, such as a partially compiled form, or any other desirable form.

According to a fourth aspect, the present disclosure is further related to a recording medium readable by a computer and having recorded thereon a computer program including instructions for executing the steps of the method according to the first aspect or the second aspect. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the methods in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram representing exemplary embodiments of a training method according to the present disclosure;
FIG. 2 is a block diagram illustrating an exemplary architecture of a training method according to the present disclosure;
FIG. 3 is a table illustrating performances of different embodiments of a training method according to the present disclosure;
FIG. 4-5 are tables illustrating comparative performances of embodiments of a training method according to the present disclosure and known methods.

## DETAILED DESCRIPTION OF EMBODIMENTS

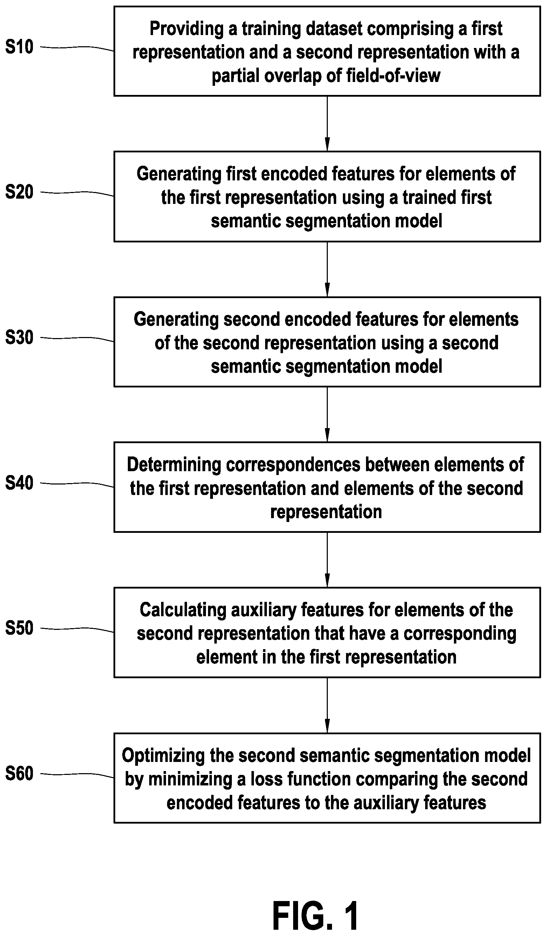

Methods for training a semantic segmentation model, which constitute exemplary embodiments of the present disclosure, are now going to be presented in relation with FIGS. 1-5.

Fig. 1 illustrates embodiments the training method according to the present disclosure.

The method comprises the steps of: S10: Providing a training dataset comprising a first representation and a second representation with a partial overlap of field-of-view; S20: Generating first encoded features from the first representation using a trained first semantic segmentation model; S30: Generating second encoded features from the second representation using a second semantic segmentation model; S40: Determining correspondences between elements of the first representation and elements of the second representation; S50: Calculating auxiliary features for elements of the second representation that have a corresponding element in the first representation; S60: Optimizing the second semantic segmentation model by minimizing a loss function comparing the second encoded features to the auxiliary features.

**S10: Providing a training dataset comprising a first representation and a second representation with a partial overlap of field-of-view**

In step S10, a first representation of a scene and a second representation of a scene are provided. The first representation and the second representation may be obtained using sensors directed at a scene. The first representation and the second representation have a partial field-of-view overlap.

In particular, in described embodiments, the first representation is an image comprising an array of pixels acquired by a camera system. Further, the second representation is a LIDAR point cloud data comprising a cloud of points acquired by a LIDAR system. The first representation may provide an image that is denser than the second representation. This means that, for a predetermined equivalent field-of-view of the scene, the first representation comprises more pixels than the number of points in the second representation. For example, in the case of a camera and a LIDAR equipped on an autonomous vehicle, an image may comprise 2048 by 1024 pixels while the LIDAR point cloud may comprise 120000 points.

When the scene is observed for a predetermined duration, the first representation and the second representation may each comprise a plurality of frames corresponding, for example, to the scene at different times.

**S20: Generating first encoded features from the first representation using a trained first semantic segmentation model**

In step S20, encoded features are generated using a trained semantic segmentation model. In embodiments, such model is a trained neural network-based 2D semantic segmentation model (also referred to as trained 2DSS model). The trained 2DSS model takes camera images as inputs and outputs labelled images wherein pixels of the images are labelled. Further, the trained 2DSS model generates first encoded features. In embodiments, the trained 2DSS model comprises at least one hidden layer from which can be extracted the first encoded features.

The trained 2DSS model may be any type of machine learning model for semantic segmentation that has been trained to generate labels for pixels within images, see for example [REF 14] and [REF 15]. In embodiments, the 2DSS model may be trained under full supervision, weak supervision, or semi-supervision.

Further, the 2DSS model may be trained on synthetic datasets, in particular synthetic datasets similar to datasets disclosed in REF 16. In the case of training on synthetic datasets, a domain adaptation pipeline (see [REF 12]) may be used to improve the quality of the extracted features and improve alignment of these features with the data from a real-world dataset that will be used in the training method according to the present disclosure. For such purpose, the trained 2DSS model may be a weakly-supervised model trained with a mean teacher framework wherein the teacher model is used to generate pseudo labels for the target domain by freezing unlabeled image predictions (see [REF 6]).

In embodiments, in contrast with domain adaptation framework of the prior art (see [REF 6] and [REF 12]), the trained 2DSS model may be aligned with real-world datasets using a domain adaptation model that takes into account label information on the second representation, i.e., the labels of the LIDAR point cloud training dataset. Even though such additional information may only provide sparse and possibly noisy supervision, it can be an important anchor for adaptation of the synthetically trained 2DSS model to the real-world training dataset.

**S30: Generating second encoded features for elements of the second representation using a second semantic segmentation model**

In step S30, second encoded features are generated using a second semantic segmentation model to be trained, also referred to as untrained 3D semantic segmentation (3DSS) model. In embodiments, the 3DSS model is a neural network-based model. The 3DSS model takes LIDAR point cloud data as inputs and outputs labelled point clouds wherein points of the point clouds are labelled. Further, the 3DSS model generates second encoded features. In embodiments, the 3DSS model comprises at least one hidden layer from which can be extracted the second encoded features.

The untrained 3DSS model may be any machine learning model for 3D semantic segmentation. For example, the trained 2DSS model may be a Cylinder3D model trained on densely labelled training image datasets (see [REF 3]).

**S40: Determining correspondences between elements of the first representation and elements of the second representation**

In step S40, correspondences between elements of the first representation and elements of the second representation are determined. In embodiments, such correspondences are point-to-pixel correspondences, i.e. correspondences between pixels of the first representation and points of the second representation, are calculated.

In embodiments, the point-to-pixel correspondences are calculated by projecting the points of a LIDAR point cloud (generated from a LIDAR system) onto the coordinates of a camera (used to generate the image). In particular, the homogeneous coordinates, $x_{hom}$ of the points are projected onto the rectified camera coordinates, $x_{rec}$, as follows:

$$x_{rec}^T = K \, [R|t] \, x_{hom}^T$$

(Equation 1)

wherein $K$, and $[R|t]$ are known intrinsic and extrinsic camera matrices of the camera used to acquire the image of the scene, respectively.

Therefore, the point-to-pixel correspondences, or mapping, m, may be extracted as follows:

$$m: x_{rec} \mapsto (k, l) \qquad \text{(Equation 2)}$$

wherein $k$ and $l$ are coordinates of the pixel that corresponds to the point with homogeneous coordinates: $x_{hom}$.

In embodiments, it is possible that the field of view of the camera system and the field of view of the LIDAR system are different so that there are points that do not correspond to any pixel in the image. In the present description, a point is said to have a valid point-to-pixel correspondence when such point, when projected onto the image, falls within the image.

**S50: Calculating auxiliary features for elements of the second representation that have a corresponding element in the first representation**

In step S50 auxiliary features are calculated for elements of the second representation that have a corresponding element in the first representation. Such auxiliary features are therefore a projection of the first encoded features to the second representation.

Such projection may be made based on the coordinate correspondences calculated in step S40. In embodiments, by virtue of the projection, per pixel features calculated from the image with the 2DSS model are projected to the coordinate space of the LIDAR point cloud.

**S60: Optimizing the second semantic segmentation model by minimizing a loss function comparing the second encoded features to the auxiliary features**

In step S60, the second semantic segmentation 3DSS model is optimized by minimizing a loss function taking into account differences between the auxiliary features calculated with the 2DSS model and the second encoded features calculated with the 3DSS model.

A purpose of the present training method is to pass (distill) the first encoded features of the trained 2DSS model to the 3DSS model so that the 2DSS model acts as a guide for training the 3DSS model to generate second encoded features that mimic the first encoded features. As the passed features are obtained from the image, the present method may be referred to as an image-guidance training method.

In embodiments, the distillation of features from the image to the LIDAR point cloud is implemented through auxiliary supervision of the 3DSS model by the 2DSS model. The 3DSS model is extended with an auxiliary head that maps the final layer features of the 3DSS model, to the image features dimension.

To this aim, the loss function used to train the 3DSS model is complemented with an auxiliary loss (or image guidance loss) taking into account the labels predicted by the trained 2DSS model. Formally, the loss function comprising the auxiliary loss may be written as a sum of two terms as follows.

$$\mathcal{L} = \mathcal{L}_{3DSSM} + \mathcal{L}_{IG}$$

(Equation 3)

In Equation 3, $\mathcal{L}_{3DSSM}$ is a baseline supervision loss function that evaluates differences between point labels predicted by the 3DSS model under training and the ground truth labels from the training dataset. Further, $\mathcal{L}_{IG}$ is the image-guidance loss that evaluates differences between encoded features predicted by the 3DSS model under training and encoded features predicted by the trained 2DSS model.

Therefore, with the addition of the auxiliary loss, the 3DSS model mimics the more mature representation of the 2DSS model for points with pixel correspondence. In particular, such auxiliary supervision provides information from a denser representation where boundary points along with small and distant objects are more richly defined due to the denser representation, thereby guiding the 3DSS model on unlabeled points.

The inventors have observed that the auxiliary supervision (via image-guidance) may be limited by the availability of valid point-to-pixel correspondences.

This is particularly important in embodiments where the camera system and the LIDAR system have a mismatch in field of view. In such cases, the set of all points with valid pixel correspondence is much smaller than the set of all points without a valid correspondence. In other words, the lack of 360° coverage for the camera means that points with pixel correspondence only make up a small portion of the LIDAR point cloud.

Therefore, the inventors have demonstrated that the training method as described hereinabove may be improved by extending the guidance to points for which there is no corresponding pixel.

To this aim, in embodiments, the loss function is extended with a one-way supervised contrastive loss, $\mathcal{L}_{CL}$ which can be expressed as follows:

$$\mathcal{L}_{CL} = \sum_c \sum_{o \in O^{(c)}} \left( -\log \frac{1}{|O^{(c)}|} \sum_{i \in I^{(c)}} \frac{\exp(f_o f_{IG,i}/\tau)}{\sum_{i' \in I} \exp(f_o f_{IG,i'}/\tau)} \right)$$

(Equation 4)

In Equation 4, $I^{(c)}$ and $O^{(c)}$ define two sets of points inside and outside of the image, respectively, with an associated class, c. Further, $\tau$ denotes the "temperature" scaling controlling the smoothness of the distribution of features.

The contrastive loss aims to apply a pull force to all points towards pixels of the same class while also applying a push to all point away from pixels of a different class. Therefore, the labels of points without valid correspondence are guided by the labels of points with valid correspondence during the auxiliary supervision.

Further, the inventors have observed that performance of the auxiliary supervision may be improved by increasing dataset variability within each mini-batch.

To this aim, in embodiments, a field-of-view mixing operation (FOVMix) is implemented. FOVMix generates a new training dataset $(\tilde{x}, \tilde{y}, \tilde{I})$ from two existing datasets $(x_A, y_A, I_A)$ and $(x_B, y_B, I_B)$, wherein x denotes coordinates of the LIDAR point cloud (input of the 3DSS model), y denotes the ground truth labels of the LIDAR point cloud, and I denotes the image (input of the 2DSS model), respectively.

In particular, in embodiments, the FOVMix operation comprises taking an image from a first dataset, A, and replacing it with an image from a second dataset, B, wherein the first and the second datasets are different. Such mixing may be formally expressed as follows:

$$\tilde{x} = [M_{AA}.x_A , (1 - M_{AA}).x_B]$$

$$\tilde{y} = [M_{AB}.y_A , (1 - M_{AB}).y_B]$$

$$\tilde{I} = I_A \qquad\qquad (\text{Equation 5})$$

In Equation 5, $M_{AB}$ and $M_{AA}$ denote binary masks that yield points within the image field of view given the intrinsic projection matrix A and extrinsic projection matrices A and B. Further, the sign "." represents a dot product between matrices.

The inventors have observed that the FOVmix operation provides an increase in the variability of the training dataset. Further, the inventors have observed that when used in combination with the contrastive loss module (i.e. when a contrastive loss (CL) term is included in the loss function), the FOVMix enhances the training performances by generating new pairings between points inside the image and points outside the image. Therefore, although FOVMix operation and contrastive loss module are two distinct aspects that can be used independently, there is a particularly advantageous synergy between the two operations when used jointly in embodiments of the present training method.

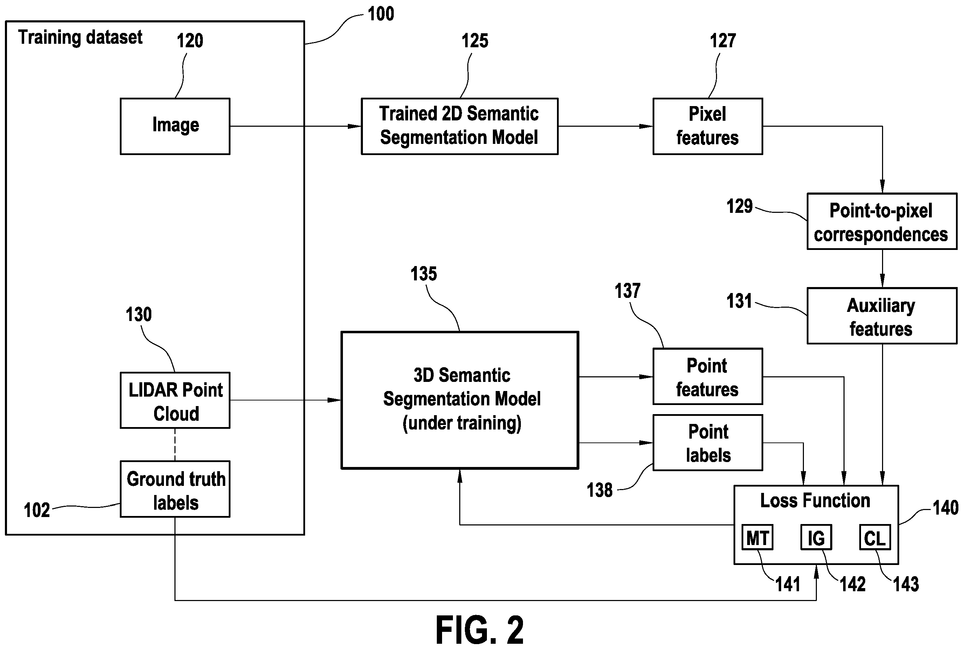

An exemplary architecture of a training method according to the present disclosure is illustrated in Fig. 2.

In reference to Fig. 2, a training dataset 100 is provided, such dataset comprising an image 120 and a LIDAR point cloud 130 representing at least partially the same scene. The scene is, for example, a real view of physical surroundings of a vehicle observed by a LIDAR and a camera, the LIDAR and the camera having a partial overlap in field-of-view.

The training dataset 100 comprises ground truth labels 102 for at least some of the points of the LIDAR point cloud 130. In particular, the training dataset may be completely labelled (in the case of full supervision) or incompletely labelled (in the case of weak supervision of semi-supervision). Further, the images 120 are unlabeled.

The image 120 is fed to a trained 2DSS model 125, and the LIDAR point cloud 130 is fed to the 3DSS model 135 under training. The trained 2DSS model 125 generates pixel features 127 for the image 120. The pixel features 127 are converted to auxiliary features 131 through a 2D-to-3D correspondence unit 129. The 3DSS model 135 under training generates point features 137 (from an inner layer) and point labels 137 (from an output layer) for the points of the input LIDAR point cloud 130.

The trained 2DSS model 125 may be a model trained on synthetic datasets comprising computer-generated labelled images. The trained 2DSS model 125 may be further trained using domain adaptation strategy in order to improve the quality of the calculated features when the image input in the 2DSS model 125 are real images from a real-world training datasets and not synthetic images from a synthetic training dataset (see [REF 12]). The domain adaptation strategy may comprise, for example, using a mean teacher model (see [REF 26]).

In reference to Fig. 2, a loss function 140 is calculated that takes into account the point labels 138 that are output by the 3DSS model 135. The loss function takes into account the point features 137 generated from an inner layer of the 3DSS model 135. The output of the loss function 140 is used to optimize and train the 3DSS model 135.

In particular, the loss function is configured to compare the point labels of the 3DSS model 135 to the ground truth labels 102 known from the training datasets 100. Such comparison allows for direct supervision of the 3DSS model 135 based on the training dataset 100.

In addition, the loss function 140 comprises a plurality of terms represented by blocks 141, 142, 143.

Represented by block 141, the loss function 140 is complemented to extend the direct supervision to unlabeled points of the training dataset 100. This is advantageous when incomplete supervision such as weak supervision and semi-supervision are used. To this aim, a mean teacher framework (MT) may be used, as disclosed, for example, in [REF 1]. The mean teacher term (MT, 141) takes into account, for the unlabeled elements of the second representation 130, a difference between point features 137 generated by the 3DSS model 135 and encoded features generated by a previously trained neural network-based teacher model. Such previously trained teacher model may be obtained, for example, through exponential moving average of the weights the second segmentation model 135.

Represented by block 142, the loss function 140 is complemented to include an image-guidance term (IG) configured to compare the point features 137 (predicted by the 3DSS model 135) to the auxiliary features (derived from predictions by the trained 2DSS model 125). Such image-guidance term implements an auxiliary supervision of the 3DSS model 135 based on the predictions of the 2DSS model 125.

Represented by block 143, the loss function 140 is complemented by a contractive loss (CL) term (see Equation 4). Such term allows for extending the auxiliary supervision to points of the LIDAR point cloud 130 that do not correspond to any pixel of the images 120 (i.e. the points that are outside the field-of-view of the image).

In embodiments, the training datasets may be processed by a mixing module FOVMix (not represented) in order to increase the variability in the datasets.

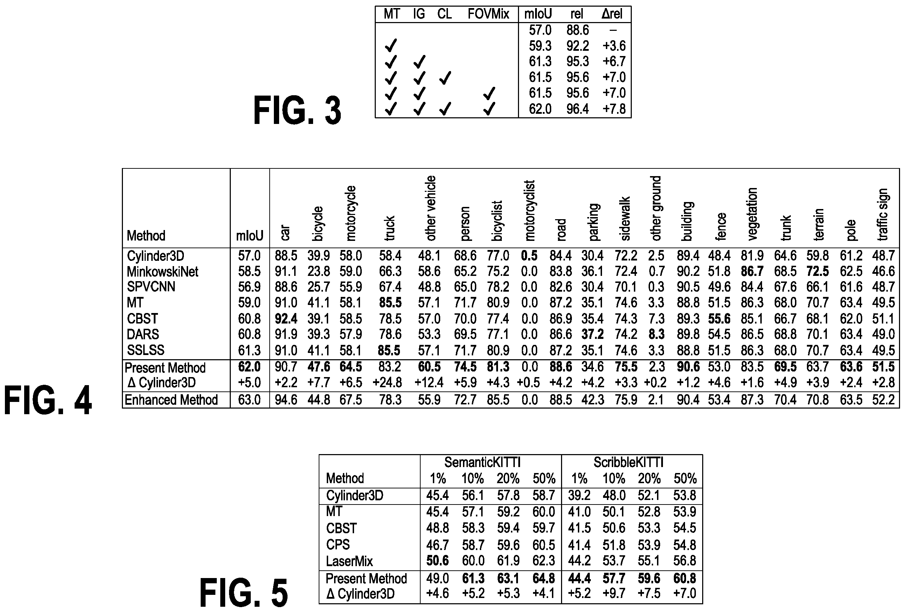

In the following, experimental results will be presented in reference to Figs.3-5. The conducted experiments comprise the training of a 3DSS model 135 using embodiments of the present training method on known training datasets, and evaluating performance of the obtained trained 3DSS model. The baseline 3DSS model used in the experiments is a Cylinder3D semantic segmentation model (see [REF 3]). A domain-adaptation pipeline is used for preparing the trained 2DSS model (see details in [REF 12]). The experiments are run on datasets directly selected or derived from large-scale outdoor-scene dataset from LIDAR segmentation: SemanticKITTI (see [REF 9] & [REF 13]) and ScribbleKITTI [REF 1].

In Fig.3, an ablation study of the present method is presented. The ablation study shows the relative efficiency of different modules of the architecture of the present method (MT: mean teacher, IG: Image Guidance, CL: Contrastive Loss, FOVMix: Field of view mixing) with respect to a baseline training method of the prior art (Cylinder3D model trained on densely annotated label, i.e. under full supervision, see [REF 3]).

Each row corresponds to a specific situation where the architecture of the method comprises some or none of the modules. A check mark indicates that the component is included in the method, and absence of a check mark indicates that the component is not included in the method.

The first row, without any check mark is a baseline method wherein the semantic segmentation model is trained without any of the described modules of the present method, for the sake of comparison.

The performances of the different architectures of the method are evaluated with respect to the following criteria: mean Intersection-over-Union compared to fully supervised training (mIoU), relative training performance compared to fully supervised training (rel), incremental improvement in relative training performance (Δrel).

In reference to Fig.3, it can be seen that each component provides a considerable performance gain over the baseline method. Specifically, a gain of 2% is achieved by using the image-guidance (IG) module. A further gain of 0.2% is achieved by using the contrastive loss (CL) module or the mixing module (FOVMix) individually. Interestingly, when utilizing both the CL module and the mixing module, a synergistic gain of 0.7% is achieved (compared to 0.4% if the individual contributions are added).

Results of embodiments of the present method when applied to semi-supervised semantic segmentation of LIDAR point cloud data from known datasets and comparison with known methods are presented in reference to Figs.4-5.

Fig. 4 shows results of the present training method and known training methods when such methods are weakly supervised to perform semantic segmentation on point cloud data from the ScribbleKITTI dataset [REF 1]. In particular, performance results are indicated regarding labelling of specific objects in the dataset (car, bicycle, motorcycle, truck, other vehicle, person, bicyclist, motorcyclist, road, parking, sidewalk, other ground, building, fence, vegetation, trunk, terrain, pole, traffic sign). The ScribbleKITTI dataset only provides labels for about 8% of the points in each frame of the LIDAR point cloud data. Such incomplete labelling (also referred to as scribble labels) reduces the labelling time by 10-fold.

The known methods to which the present method is compared are: Cylinder 3D (see [REF 3]), MinkowskiNet (see [REF 4]), SPVCNN (see [REF 5]), MT (see [REF 6]), CBST (see [REF 7]), DARS (see [REF 8]), SSLSS (see [REF 2]). The embodiment of the present training method that is used to obtain the results of Fig. 4 comprises a loss function with a mean teacher (MT) term, an image-guidance (IG) term, and a contrastive loss (CL) term, as described before.

Further, the improvement in performance of the present method compared to the Cylinder3D model is indicated in the penultimate row (ΔCylinder3D). In addition, performance of an embodiment wherein the training method is used within a class-range-balanced self-training pipeline is indicated in the last row (Enhanced method).

In reference to Fig.4, it can be seen that the present training method outperforms methods of the prior art, showing improvements for all classes and reaching 96.4% relative performance when compared to fully supervised training while using only 8% of labeled points. Specifically, large gains are observed for small objects classes such as bicycle and motorcycle when compared to the previous methods of the prior art, even when compared to efficient methods of the prior art using the SSLSS model [REF 2].

Interestingly, it is noticeable that, in contrast to SSLSS-based training method, the present training method does not require self-training. Therefore, the training times are considerably reduced, from about 5 days to about 1 day when using 8 graphical processing units such as Nvidia RTX2080Ti's. For the present training method, such training time is a total training time, which also includes the training of the 2DSS model model.

Performance of an embodiment of the present method further comprising a self-training scheme achieves 63% mIoU, i.e., 98% relative performance compared to the fully supervised baseline method (based on the Cylinder3D model). Such self-training scheme is described, for example, in [REF 1].

Fig. 5 shows results of the present training method and known training methods when such methods are semi-supervised to perform semantic segmentation on LIDAR point cloud data from the SemanticKITTI dataset [REF 9] (column 2 to 5) and the ScribbleKITTI dataset [REF 1] (column 6 to 9). The known methods to which the present method is compared are: Cylinder 3D (see [REF 3]), MT (see [REF 6]), CBST (see [REF 7]), CPS (see [REF 11]), LaserMix (see [REF 10]). Similarly to Fig. 4, in Fig. 5, the training method based on the Cylinder3D model. As the ScribbleKITTI training dataset comprises only weak labels, the semi-supervised training of the methods on the ScribbleKITTI training dataset can be considered as a combination a weak supervision and a semi-supervision wherein each frame of the dataset are at least partially lacking labels, and some frames are completely unlabeled.

The percentage values in the first row indicate the uniform sampling rate applied to generate the semi-supervised dataset utilized when using the different training methods, following the approach of [REF 10]. In particular, a uniform sampling rate of 10% indicates that only 10% of the point clouds in the training dataset are labelled while the remaining 90% of the point cloud are completely unlabeled.

In reference to Fig. 5, it can be seen that the present training method outperforms the methods of the prior art by a significant margin for nearly all classes of objects. In particular, the present method advantageously provides the best improvement for semi-supervised training on the ScribbleKITTI dataset, wherein a larger number of labels is missing. The present method shows particularly efficient in this case as the image-guidance with the calculated labels of the 2DSS model (via the different terms, MT, IG, CL, of the loss function 104) and the mixing of the datasets (using the FOVMix module) can synergistically learn boundary information despite the lack of ground truth labels.

In reference to Fig. 5, it is shown that the present method is particularly more efficient that the baseline method based on the Cylinder3D model, with an improvement in mIoU between 4.1% and 9.7%. Most importantly, such improvements in performance do not require additional memory or computational requirements during inference.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A computer-implemented method for training a semantic segmentation model comprising steps of:

   - (S10) providing a training dataset (100) comprising a first representation (120) and a second representation (130), wherein the first representation (120) and the second representation (130) have at least a partial overlap of field-of-view;
   - (S20) generating first encoded features (127) for elements of the first representation (120) using a trained first semantic segmentation model (125);
   - (S30) generating second encoded features (137) for elements of the second representation (130) using a second semantic segmentation model (135);
   - (S40) determining correspondences (129) between elements of the first representation (120) and elements of the second representation (130);
   - (S50) based on the first encoded features (127), calculating auxiliary features (131) for elements of the second representation (130) having correspondences (129) with elements of the first representation (120); and
   - (S60) optimizing the second semantic segmentation model (125) by minimizing a loss function (140) configured to compare, for elements of the second representation (130) having correspondences (129) with elements of the first representation (120), the second encoded features (137) to the auxiliary features (131).

2. The method of claim 1, wherein the first representation (120) is denser than the second representation (130).

3. The method of claims 1 or 2, wherein the first representation (120) is an image and the second representation (130) is a LIDAR point cloud.

4. The method of any of claims 1 to 3, further comprising:

   - training the first semantic segmentation model (125) on synthetic training datasets.

5. The method of claim 4, wherein:

   - at least a plurality of elements of the second representation (130) have ground truth labels (102), the method further comprising:
   - adapting the first semantic segmentation model (125) to real training dataset by incomplete supervision using the ground truth labels (102) projected to the first representation (120), based on the calculated correspondences (129).

6. The method of any of the preceding claims, wherein the second representation (130) of the training dataset (100) comprises unlabeled elements, such elements lacking ground truth labels.

7. The method of claim 6, wherein the loss function (140) comprises a mean teacher term (MT, 141) configured to evaluate, for the unlabeled elements of the second representation (130), differences between labels (138) predicted by the second segmentation model (135) and labels generated by a previously trained neural network-based teacher model.

8. The method of claim 7, wherein the second segmentation model (135) comprises a neural network with weights, and wherein the neural network-based teacher model is obtained by exponential moving average of the weights of the second segmentation model (135).

9. The method of any of claims 1 to 8, wherein the loss function (140) comprises an image-guidance term (IG, 142) taking into account, for elements of the second representation (130) having correspondences (129) with elements of the first representation (120), a difference between the second encoded features (137) generated by the second semantic segmentation model (135) and the auxiliary features (131) derived from the first semantic segmentation model (125).

10. The method of any of claims 1 to 9, further comprising:

    - calculating auxiliary features (131) for elements of the second representation (130) that do not have correspondences (129) with elements of the first representation (120);
    - wherein the loss function (140) comprises a contrastive loss term (CL, 143) configured to compare, for the elements of the second representation (130) that do not have correspondences (129) with elements of the first representation (120), the second encoded features (137) to the auxiliary features (131).

11. The method of any of claims 1 to 10, wherein the second representation (130) is provided by combining a plurality of representations, such representations having a partial mismatch in field-of-view.

12. The method of any of claims 1 to 10, further comprising:

    - obtaining the first representation of the training dataset from a first training dataset; and
    - obtaining the second representation of the training dataset by combining:
    - a part of a second representation from the first training dataset, such part corresponding to elements of the second representation of the first training dataset within a field of view of the first representation, and
    - a part of a second representation from the second training dataset, such part corresponding to elements of the second representation beyond the field of view of the first representation.

13. A computer-implemented method for semantic segmentation of LIDAR point cloud data, the method comprising steps of: acquiring LIDAR point cloud data and images from observation of a real scene and; and utilizing a semantic segmentation model trained using the method according to any one of claims 1 to 12 in order to predict labels for the LIDAR point cloud.

14. A computer program set including instructions for executing the steps of a method of any one of claims 1 to 13, when said program set is executed by at least one computer.

15. A recording medium readable by a computer and having recorded thereon at least one computer program including instructions for executing the steps of the method of any one of claims 1 to 13.

| S10 | Providing a training dataset comprising a first representation and a second representation with a partial overlap of field-of-view |
|---|---|

| S20 | Generating first encoded features for elements of the first representation using a trained first semantic segmentation model |
|---|---|

| S30 | Generating second encoded features for elements of the second representation using a second semantic segmentation model |
|---|---|

| S40 | Determining correspondences between elements of the first representation and elements of the second representation |
|---|---|

| S50 | Calculating auxiliary features for elements of the second representation that have a corresponding element in the first representation |
|---|---|

| S60 | Optimizing the second semantic segmentation model by minimizing a loss function comparing the second encoded features to the auxiliary features |
|---|---|

# FIG. 1

**FIG. 2**

EP 4 432 247 A1

## FIG. 3

| MT | IG | CL | FOVMix | mIoU | rel | Δrel |
|----|----|----|--------|------|------|------|
|    |    |    |        | 57.0 | 88.6 | – |
| ✓  |    |    |        | 59.3 | 92.2 | +3.6 |
| ✓  | ✓  |    |        | 61.3 | 95.3 | +6.7 |
| ✓  | ✓  | ✓  |        | 61.5 | 95.6 | +7.0 |
| ✓  | ✓  |    | ✓      | 61.5 | 95.6 | +7.0 |
| ✓  | ✓  | ✓  | ✓      | 62.0 | 96.4 | +7.8 |

## FIG. 4

| Method | mIoU | car | bicycle | motorcycle | truck | other vehicle | person | bicyclist | motorcyclist | road | parking | sidewalk | other ground | building | fence | vegetation | trunk | terrain | pole | traffic sign |
|--------|------|-----|---------|------------|-------|---------------|--------|-----------|--------------|------|---------|----------|--------------|----------|-------|------------|-------|---------|------|--------------|
| Cylinder3D | 57.0 | 88.5 | 39.9 | 58.0 | 58.4 | 48.1 | 68.6 | 77.0 | **0.5** | 84.4 | 30.4 | 72.2 | 2.5 | 89.4 | 48.4 | 81.9 | 64.6 | 59.8 | 61.2 | 48.7 |
| MinkowskiNet | 58.5 | 91.1 | 23.8 | 59.0 | 66.3 | 58.6 | 65.2 | 75.2 | 0.0 | 83.8 | 36.1 | 72.4 | 0.7 | 90.2 | 51.8 | **86.7** | 68.5 | **72.5** | 62.5 | 46.6 |
| SPVCNN | 56.9 | 88.6 | 25.7 | 55.9 | 67.4 | 48.8 | 65.0 | 78.2 | 0.0 | 82.6 | 30.4 | 70.1 | 0.3 | 90.5 | 49.6 | 84.4 | 67.6 | 66.1 | 61.6 | 48.7 |
| MT | 59.0 | 91.0 | 41.1 | 58.1 | **85.5** | 57.1 | 71.7 | 80.9 | 0.0 | 87.2 | 35.1 | 74.6 | 3.3 | 88.8 | 51.5 | 86.3 | 68.0 | 70.7 | 63.4 | 49.5 |
| CBST | 60.8 | **92.4** | 39.1 | 58.5 | 78.5 | 57.0 | 70.0 | 77.4 | 0.0 | 86.9 | 35.4 | 74.3 | 7.3 | 89.3 | **55.6** | 85.1 | 66.7 | 68.1 | 62.0 | 51.1 |
| DARS | 60.8 | 91.9 | 39.3 | 57.9 | 78.6 | 53.3 | 69.5 | 77.1 | 0.0 | 86.6 | **37.2** | 74.2 | **8.3** | 89.8 | 54.5 | 86.5 | 68.8 | 70.1 | 63.4 | 49.0 |
| SSLSS | 61.3 | 91.0 | 41.1 | 58.1 | **85.5** | 57.1 | 71.7 | 80.9 | 0.0 | 87.2 | 35.1 | 74.6 | 3.3 | 88.8 | 51.5 | 86.3 | 68.0 | 70.7 | 63.4 | 49.5 |
| Present Method | **62.0** | 90.7 | **47.6** | **64.5** | 83.2 | **60.5** | **74.5** | **81.3** | 0.0 | **88.6** | 34.6 | **75.5** | 2.3 | **90.6** | 53.0 | 83.5 | **69.5** | 63.7 | **63.6** | **51.5** |
| Δ Cylinder3D | +5.0 | +2.2 | +7.7 | +6.5 | +24.8 | +12.4 | +5.9 | +4.3 | +0.5 | +4.2 | +4.2 | +3.3 | +0.2 | +1.2 | +4.6 | +1.6 | +4.9 | +3.9 | +2.4 | +2.8 |
| Enhanced Method | 63.0 | 94.6 | 44.8 | 67.5 | 78.3 | 55.9 | 72.7 | 85.5 | 0.0 | 88.5 | 42.3 | 75.9 | 2.1 | 90.4 | 53.4 | 87.3 | 70.4 | 70.8 | 63.5 | 52.2 |

## FIG. 5

| Method | SemanticKITTI | | | | ScribbleKITTI | | | |
|--------|------|------|------|------|------|------|------|------|
|        | 1% | 10% | 20% | 50% | 1% | 10% | 20% | 50% |
| Cylinder3D | 45.4 | 56.1 | 57.8 | 58.7 | 39.2 | 48.0 | 52.1 | 53.8 |
| MT | 45.4 | 57.1 | 59.2 | 60.0 | 41.0 | 50.1 | 52.8 | 53.9 |
| CBST | 48.8 | 58.3 | 59.4 | 59.7 | 41.5 | 50.6 | 53.3 | 54.5 |
| CPS | 46.7 | 58.7 | 59.6 | 60.5 | 41.4 | 51.8 | 53.9 | 54.8 |
| LaserMix | **50.6** | 60.0 | 61.9 | 62.3 | 44.2 | 53.7 | 55.1 | 56.8 |
| Present Method | 49.0 | **61.3** | **63.1** | **64.8** | **44.4** | **57.7** | **59.6** | **60.8** |
| Δ Cylinder3D | +4.6 | +5.2 | +5.3 | +4.1 | +5.2 | +9.7 | +7.5 | +7.0 |

EP 4 432 247 A1

Europäisches
Patentamt
European
Patent Office
Office européen
des brevets

EUROPEAN SEARCH REPORT

Application Number

EP 23 16 2627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAUTIER CORENTIN ET AL: "Image-to-Lidar Self-Supervised Distillation for Autonomous Driving Data", 2022 IEEE/CVF CONFERENCE ON COMPUTER VISION AND PATTERN RECOGNITION (CVPR), IEEE, 18 June 2022 (2022-06-18), pages 9881-9891, XP034195628, DOI: 10.1109/CVPR52688.2022.00966 [retrieved on 2022-09-27] * abstract * * page 9881 - page 9889 * * figures 1,2 * | 1-15 | INV. G06V10/774 G06V10/778 G06V20/56 G06V20/64 |
| A | Vijendra: "Knowledge Distillation: Theory and End to End Case Study", , 4 January 2022 (2022-01-04), pages 1-22, XP093076462, Retrieved from the Internet: URL:https://www.analyticsvidhya.com/blog/2022/01/knowledge-distillation-theory-and-end-to-end-case-study/ [retrieved on 2023-08-28] * page 1 - page 10 * | 1-15 | |
| A | YUEH-CHENG LIU ET AL: "Learning from 2D: Contrastive Pixel-to-Point Knowledge Transfer for 3D Pretraining", ARXIV.ORG, CORNELL UNIVERSITY LIBRARY, 201 OLIN LIBRARY CORNELL UNIVERSITY ITHACA, NY 14853, 26 July 2021 (2021-07-26), XP091003855, * abstract * * page 1 - page 7 * * figures 1,2 * | 1-15 | |

TECHNICAL FIELDS
SEARCHED (IPC)

G06V

The present search report has been drawn up for all claims

| Place of search | Date of completion of the search | Examiner |
|---|---|---|
| The Hague | 28 August 2023 | Karwe, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **UNAL, OZAN ; DAI, DENGXIN ; VAN GOOL, LUC.** Scribble-supervised lidar semantic segmentation. *Proceedings of the IEEE/CVF Conference on Computer Vision and Pattern Recognition,* 2022, 2697-2707
- **JIANG, LI ; SHI, SHAOSHUAI ; TIAN, ZHUOTAO et al.** Guided point contrastive learning for semi-supervised point cloud semantic segmentation. *Proceedings of the IEEE/CVF international conference on computer vision,* 2021, 6423-6432
- **ZHU, XINGE ; ZHOU, HUI ; WANG, TAI et al.** Cylindrical and asymmetrical 3d convolution networks for lidar segmentation. *Proceedings of the IEEE/CVF conference on computer vision and pattern recognition,* 2021, 9939-9948
- **CHOY, CHRISTOPHER ; GWAK, JUNYOUNG ; SAVARESE, SILVIO.** 4d spatio-temporal convnets: Minkowski convolutional neural networks. *Proceedings of the IEEE/CVF conference on computer vision and pattern recognition,* 2019, 3075-3084
- Searching efficient 3d architectures with sparse point-voxel convolution. **TANG, HAOTIAN ; LIU, ZHIJIAN ; ZHAO, SHENGYU et al.** Computer Vision-ECCV 2020: 16th European Conference, Glasgow, UK. Springer International Publishing, 23 August 2020, 685-702
- **TARVAINEN, A. ; VALPOLA, H.** Weight-averaged consistency targets improve semi-supervised deep learning results. *arXiv: 1703.01780,* 2017
- **ZOU, YANG ; YU, ZHIDING ; KUMAR, B. V. K. et al.** Unsupervised domain adaptation for semantic segmentation via class-balanced self-training. *Proceedings of the European conference on computer vision (ECCV),* 2018, 289-305
- **HE, RUIFEI ; YANG, JIHAN ; QI, XIAOJUAN.** Re-distributing biased pseudo labels for semi-supervised semantic segmentation: A baseline investigation. *Proceedings of the IEEE/CVF International Conference on Computer Vision,* 2021, 6930-6940

- **BEHLEY, JENS ; GARBADE, MARTIN ; MILIOTO, ANDRES et al.** Semantickitti: A dataset for semantic scene understanding of lidar sequences. *Proceedings of the IEEE/CVF international conference on computer vision,* 2019, 9297-9307
- **KONG, LINGDONG ; REN, JIAWEI ; PAN, LIANG et al.** Lasermix for semi-supervised lidar semantic segmentation. *arXiv:2207.00026,* 2022
- **CHEN, XIAOKANG ; YUAN, YUHUI ; ZENG, GANG et al.** Semi-supervised semantic segmentation with cross pseudo supervision. *Proceedings of the IEEE/CVF Conference on Computer Vision and Pattern Recognition,* 2021, 2613-2622
- **HOYER, LUKAS ; DAI, DENGXIN ; VAN GOOL, LUC.** Daformer: Improving network architectures and training strategies for domain-adaptive semantic segmentation. *Proceedings of the IEEE/CVF Conference on Computer Vision and Pattern Recognition,* 2022, 9924-9935
- **GEIGER, ANDREAS ; LENZ, PHILIP ; STILLER, CHRISTOPH et al.** Vision meets robotics: The kitti dataset. *The International Journal of Robotics Research,* 2013, vol. 32 (11), 1231-1237
- **LIU, ZE ; LIN, YUTONG ; CAO, YUE et al.** Swin transformer: Hierarchical vision transformer using shifted windows. *Proceedings of the IEEE/CVF international conference on computer vision,* 2021, 10012-10022
- **XIE, ENZE ; WANG, WENHAI ; YU, ZHIDING et al.** SegFormer: Simple and efficient design for semantic segmentation with transformers. *Advances in Neural Information Processing Systems,* 2021, vol. 34, 12077-12090
- Playing for data: Ground truth from computer games. **RICHTER, STEPHAN R. ; VINEET, VIBHAV ; ROTH, STEFAN et al.** Computer Vision-ECCV 2016: 14th European Conference, Amsterdam, The Netherlands. Springer International Publishing, 11 October 2016, 102-118